# DEMANDE DE BREVET EUROPEEN

(11) **EP 1 772 355 A2**
(43) Date de publication de la demande: **11.04.2007**
(21) Numéro de dépôt: 06301021.9
(22) Date de dépôt: 05.10.2006
(51) Int. Cl.: B62D 25/20, B62D 29/04, B29C 53/04

(54) **Plancher de véhicule automobile au moins partiellement en matière plastique et procédé de fabrication d'un tel plancher**

(30) Priorité: 07.10.2005 FR 0510290
(71) Demandeur: Inoplast, 07100 Annonay (FR)
(72) Inventeur: Martin, Laurent, 07340 Peaugres (FR)
(74) Mandataire: Remy, Vincent Noel Paul

(57) **Abrégé**

L'invention concerne un plancher (10) de véhicule automobile au moins partiellement en matière plastique, comportant un bord périphérique (12, 12') muni d'orifices de fixation (18, 18') et destiné à être rapporté sur une caisse en blanc (26) et fixé à celle-ci par des moyens de fixation traversant lesdits orifices de fixation (18, 18'). Le bord périphérique (12, 12') de ce plancher est muni d'au moins deux orifices de fixation (18, 18'), disposés de part et d'autre d'une ligne de pliure 18 appartenant audit bord (12, 12'), ledit bord (12, 12') étant conformé de manière à pouvoir être replié sur lui-même le long de cette ligne de pliure (16), en superposant les deux orifices de fixation (18, 18').

## Description

La présente invention concerne un plancher de véhicule automobile au moins partiellement en matière plastique, comportant un bord périphérique muni d'orifices de fixation et destiné à être rapporté sur une caisse en blanc et fixé à celle-ci par des moyens de fixation traversant lesdits orifices de fixation.

On connaît déjà de tels planchers, notamment ceux réalisés en SMC (shield moulded compound, ou complexe moulé en feuille), comme décrit par exemple dans le document FR 0409293.

Un plancher de ce type est rigide dans son ensemble. Il est fixé à la caisse en blanc du véhicule par des moyens de fixation traversants, tels que des vis ou des rivets, logés dans les orifices de fixation de son bord périphérique et solidarisés à la caisse en blanc.

Lors d'un choc particulièrement violent, l'arrière du véhicule peut être écrasé et, dans ce cas, les orifices de fixation sont susceptibles de se déchirer, privant les moyens de fixation de toute efficacité. Il est alors possible que le plancher ne demeure pas à l'intérieur du logement qui lui est réservé, voire se décroche du véhicule.

Ce phénomène résulte du fait que les efforts subis par le plancher lors de l'écrasement ne sont pas répartis sur toute sa surface mais se concentrent tout d'abord sur une fixation particulière. Le plancher finit donc par céder en cet emplacement, après quoi les efforts se reportent sur une fixation voisine, provoquant ainsi une réaction en chaîne capable de faire céder le plancher au niveau de toutes ses fixations.

L'invention vise notamment à renforcer et à rigidifier le plancher au niveau de ses fixations, de sorte que le celui-ci puisse résister, en ces emplacements particuliers, à des efforts plus importants.

A cet effet, l'invention a pour objet un plancher de véhicule automobile au moins partiellement en matière plastique, comportant un bord périphérique muni d'orifices de fixation et destiné à être rapporté sur une caisse en blanc et fixé à celle-ci par des moyens de fixation traversant lesdits orifices de fixation, caractérisé en ce que le bord périphérique est muni d'au moins deux orifices de fixation disposés de part et d'autre d'une ligne de pliure appartenant audit bord, ledit bord étant conformé de manière à pouvoir être replié sur lui-même le long de cette ligne de pliure, en superposant les deux orifices de fixation.

Pour le montage du plancher sur le véhicule automobile, le bord périphérique est donc replié sur lui-même, les deux orifices de fixation superposés permettant le passage d'un unique élément de fixation, par exemple une vis, apte à se solidariser à la caisse en blanc du véhicule.

Le pliage et le doublement d'épaisseur du bord du plancher ont pour effet d'accroître sa rigidité et sa résistance aux chocs, sans pour autant engendrer une trop grande consommation de la matière constituant le plancher et sans changer le temps de cycle de moulage.

Avantageusement, le plancher comporte, sur son bord périphérique, des moyens de formation de la ligne de pliure.

Ces moyens sont par exemple constitués par une diminution locale d'épaisseur.

Ainsi, il est aisé de plier le bord du plancher le long de sa ligne de pliure, celle-ci ayant une rigidité moindre que celle du reste du bord.

Avantageusement, le plancher selon l'invention comporte un fût fusible au voisinage de l'un des orifices de fixation. Au sens de l'invention, un fût fusible est un cylindre de petite surface portante et de grande hauteur apte à flamber selon sa direction axiale ou à se rompre.

Ce fût fusible est plus fragile que le reste du plancher. Ainsi, lorsque les efforts sont concentrés sur une fixation après un choc de type arrière, ce fût se rompt ou flambe avant le plancher lui-même. Une partie de l'énergie du choc est ainsi employée à la rupture du fût et les efforts qui s'exercent sur la fixation à la suite de la rupture du fût sont donc moindres. Ainsi, le plancher est apte à supporter plus d'énergie, plus de déformations et à résister plus longtemps

La réaction en chaîne qui peut conduire à un décrochage du plancher à la suite de la rupture une à une de toutes les fixations, s'arrête donc plus rapidement grâce à la présence de ce fût fusible.

Bien entendu, ce fût est susceptible d'être utilisé sans combinaison avec un bord replié ou toute autre caractéristique décrite dans cette description.

Dans un mode de réalisation particulier, le plancher comporte des moyens de retenue d'une pince apte à serrer le bord du plancher et une partie de la caisse en blanc.

Le rôle d'une telle pince est de maintenir une liaison entre le plancher et la caisse, au moins provisoirement, même si toutes les fixations ont cédé à la suite d'un choc arrière.

Bien entendu, ces moyens de retenue sont susceptibles d'être utilisés sans combinaison avec un bord replié, un fût fusible ou toute autre caractéristique décrite dans la présente description.

Ces moyens de retenue comprennent, par exemple, une nervure située au voisinage de la ligne de pliure.

Le plancher peut comporter également l'une ou plusieurs des caractéristiques optionnelles suivantes :
- la ligne de pliure est parallèle à un bord du plancher, s'étendant dans la direction longitudinale du véhicule,
- le plancher forme un bac pour une roue de secours,
- le plancher contient des fibres de renfort en tissu, et
- le plancher comporte au moins une nervure de fixation d'au moins un lien de maintien du plancher à la caisse en blanc, le lien étant destiné à être enserré entre la nervure de fixation et une agrafe apte à recouvrir la nervure.

La présente invention concerne également un procédé de fabrication d'un plancher de véhicule au moins partiellement en matière plastique, destiné à être rapporté sur un véhicule automobile, comprenant une étape de moulage.

Un tel procédé est connu dans l'état de la technique.

Lors de l'étape de moulage, dans le cadre de l'utilisation d'une matière avec renfort tissu, on fait volontairement dépasser le flanc de matière dans les chambres de compression du moule, pour garantir la présence du renfort tissu jusqu'en bordure de la pièce moulée et au moins sur les points de fixation. On utilise un moule plus grand que le plancher et on coupe la pièce issue de moulage aux dimensions du plancher. En général, cette découpe est réalisée grâce à la chambre de compression. L'élimination de la périphérie de la pièce moulée a pour but de garantir une meilleure rigidité du bord du plancher.

Or, ce procédé comporte de nombreux inconvénients : il crée des pertes de matière et nécessite un outillage et un entretien coûteux, en raison de l'étape de découpe.

L'invention a pour objet de remédier à ces inconvénients en fournissant un procédé permettant de renforcer les fixations d'un plancher, tout en réduisant ses coûts de fabrication.

L'invention a pour objet un procédé de fabrication d'un plancher de véhicule au moins partiellement en matière plastique, destiné à être rapporté sur un véhicule automobile, comprenant une étape de moulage, **caractérisé en ce qu**'il comprend, postérieurement à l'étape de moulage, une étape de pliage du plancher selon une ligne de pliure située sur un bord périphérique de ce plancher.

Ainsi, pour une même quantité de matière utilisée, les fixations sont renforcées de manière plus fiable, puisque, localement, l'épaisseur du plancher est doublée, et le renfort est sécurisé en position. De plus, on peut s'affranchir de la découpe de ce plancher ce qui permet une meilleure gestion de la matière utilisée.

L'invention sera mieux comprise à la lecture de la description qui va suivre, donnée uniquement à titre d'exemple et faite en se référant aux dessins dans lesquels :
- la figure 1 est une vue en perspective d'un tronçon d'un plancher de véhicule automobile selon un mode de réalisation de l'invention,
- la figure 2 est une coupe transversale selon A-A d'un bord périphérique du plancher dans une première configuration,
- la figure 3 est une coupe transversale selon A-A d'un bord périphérique du plancher dans une seconde configuration, le plancher étant monté sur la caisse en blanc,
- la figure 4 est une vue de dessous en perspective du plancher représenté sur la figure 1,
- la figure 5 est une vue en coupe de moyens de fixation fusibles du plancher à la caisse du véhicule.

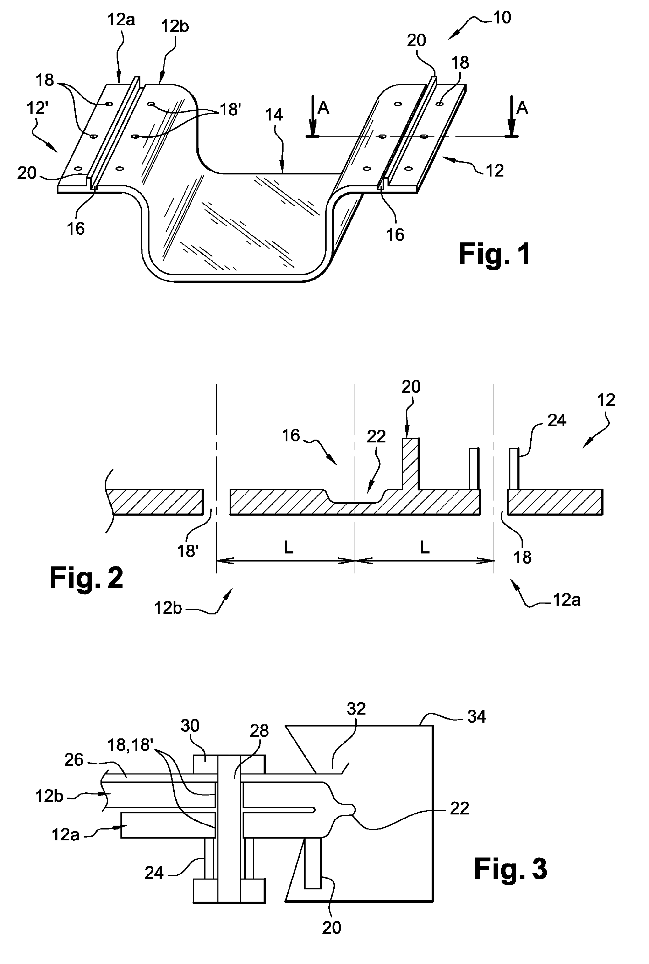

On a représenté, sur la figure 1, un tronçon d'un plancher 10 réalisé en matière plastique contenant un tissu de fibres de renfort. Ce plancher est destiné à être rapporté sous une caisse en blanc d'un véhicule automobile (non représentée).

Le plancher comporte deux bords périphériques 12, 12', destinés à être fixés aux longerons de la caisse (non représentés), et une partie centrale 14, formant bac de roue de secours pour le véhicule automobile.

Les bords périphériques 12, 12' comportent une ligne de pliure 16, s'étendant dans la direction longitudinale du plancher, qui est parallèle à la direction longitudinale du véhicule, une fois le plancher 10 monté. La ligne de pliure 16 sépare un bord périphérique 12, 12' en deux parties distinctes, une partie externe 12a et une partie interne 12b.

Dans la première configuration, représentée sur les figures 1 et 2, les deux parties distinctes du bord sont coplanaires. Cette configuration est directement issue du moulage du plancher.

Les bords périphériques 12, 12' sont munis d'orifices de fixation 18, 18' grâce auxquels le plancher 10 peut être fixé à la caisse en blanc.

Les orifices 18, 18' sont situés symétriquement deux à deux par rapport à la ligne de pliure 16. L'orifice 18 est donc aménagé sur la partie externe 12a, alors que l'orifice 18' est aménagé sur la partie 12b.

Le plancher 10 comprend également des moyens de retenue d'une pince, constitués par une nervure 20 située au voisinage de la ligne de pliure 16, sur la partie externe 12a du bord périphérique 12, 12'. La nervure 20 est issue de moulage avec l'ensemble du plancher.

Les figures 2 et 3 représentent une vue en coupe A-A transversale d'un bord périphérique 12, 12' du plancher 10.

Deux orifices 18 et 18', symétriques l'un de l'autre par rapport à la ligne de pliure, sont mieux visibles sur la figure 2. En leur milieu, une diminution locale d'épaisseur 22 marque l'emplacement de la ligne de pliure 16.

La partie externe 12a est en outre munie d'un fût 24 entourant l'orifice 18 de fixation et orienté vers le haut. Ce fût est issu de moulage avec le bord périphérique. Il est fusible, c'est-à-dire apte à se rompre en cas de déformation trop importante. Sa hauteur relativement grande le rend particulièrement sensible aux inclinaisons que pourrait prendre un organe de fixation la traversant.

On voit, sur la figure 3, le bord périphérique 12, 12' du plancher 10 ainsi qu'une caisse en blanc 26 de véhicule automobile, sur laquelle le plancher 10 est monté, et des moyens de fixation du plancher 10 à la caisse en blanc 26.

Dans cette seconde configuration, la ligne de pliure 16 constitue le rebord du plancher 10.

La partie externe 12b du bord périphérique 12, 12' du plancher 10 a été repliée vers le bas et rabattue contre la partie interne 12a du bord.

Une fois le bord du plancher replié, la partie externe 12a est superposée à la partie interne 12b, désormais située en dessous de celle-ci. Les orifices 18 et 18' sont superposés.

La nervure 20 est orientée vers le bas et se situe à l'extrémité du plancher 10. Le fût 24 est également orienté vers le bas.

La caisse en blanc 26 comporte un orifice de fixation 28, qui se trouve au droit des orifices 18 et 18', lorsque le plancher, dans sa seconde configuration, est en position de fixation.

Un organe de fixation 30, appartenant aux moyens de fixation classiques d'un plancher à une caisse en blanc de véhicule, par exemple un système vis-écrou, est également représenté. Cet organe de fixation traverse les orifices 18, 18' et 28 superposés et est monté serré sur le fût 24.

Ainsi, lorsque le plancher 10 subit un choc de type arrière et que les efforts se concentrent au niveau d'une fixation - essentiellement par cisaillement, ce qui tend à incliner l'organe de fixation - le fût 24 fusible étant plus fragile, il se rompt d'abord. Le plancher 10 est cependant toujours lié à la caisse en blanc 26, avec un jeu au niveau de la fixation.

Les efforts se concentrant sur le plancher 10 sont donc moindres que dans l'état de la technique. Or, au niveau des fixations, le plancher 10 étant localement d'une épaisseur double, il est plus rigide et moins susceptible de se rompre pour des efforts appliqués identiques.

Ces deux phénomènes combinés renforcent donc de manière fiable la résistance des fixations.

La caisse en blanc 26 comporte également des moyens de retenue d'une pince 34, constitués d'un rebord externe 32 orienté vers le haut. Cette pince 34, par exemple de type pince à nappe, est apte à serrer le bord du plancher et une partie de la caisse en blanc et constitue des moyens de fixation supplémentaires dans un but sécuritaire. Elle maintient donc le plancher 10 et la caisse en blanc 26 ensemble et est retenue par la nervure 20 et le rebord 32.

Cela évite le décrochage du plancher 10 du véhicule automobile dans le cas où toutes les fixations auraient cédé.

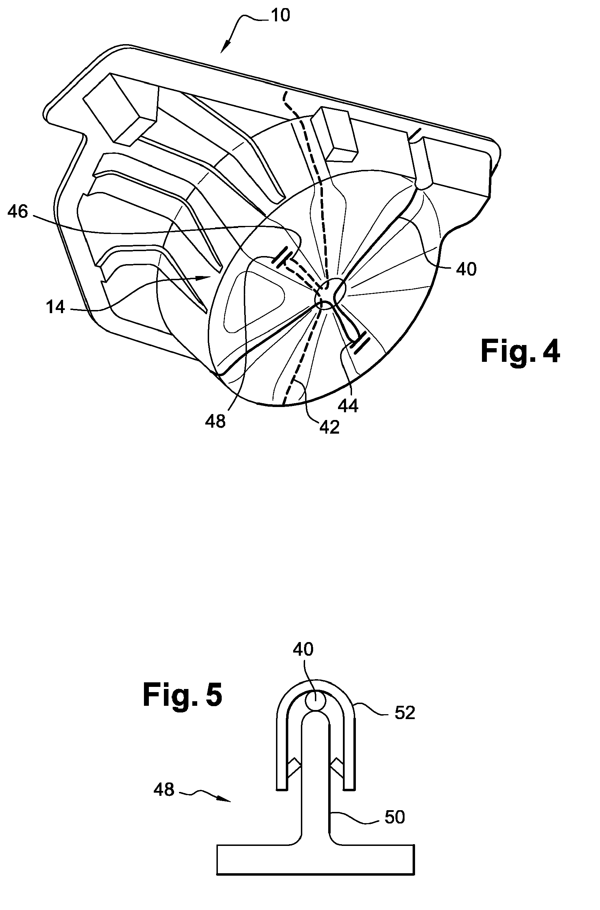

Sur la figure 4, on a représenté d'autres moyens pour maintenir ensemble le plancher 10 et la caisse en blanc 26 en cas de choc.

Ces moyens de maintien comprennent deux liens 40 et 42 dont les extrémités sont fixées à la caisse en blanc 26. Ces liens sont par exemple des câbles ou des tresses.

Les liens 40 et 42 sont disposés sous le plancher 10 de manière à l'empêcher de tomber dans le cas où les fixations auraient cédé. De préférence, et comme représenté sur la figure 4, les liens se croisent au centre du plancher qui forme le bac 14 pour la roue de secours.

Pour éviter qu'en cas de choc, les liens 40 et 42 ne subissent des efforts en traction trop élevés, il est préférable que les liens ne soient pas trop tendus autour du plancher et qu'ils autorisent une déformation ou un léger déplacement de celui-ci. Pour cela, on utilise des liens 40, 42 lâches dont la longueur est supérieure aux dimensions du plancher 10 qu'ils enserrent.

Du fait que les liens 40, 42 sont lâches, ils risquent d'interférer avec différents éléments du véhicule. On prévoit donc des fixations fusibles 48 des liens 40 et 42 au plancher, représentées plus en détail sur la figure 5.

Ces fixations fusibles 48 comprennent une nervure 50 ménagée à la surface du plancher 10 et une agrafe 52 destinée à recouvrir la nervure 50 de façon à enserrer le lien 40, 42 entre la nervure 50 et l'agrafe 52. La nervure 50 est issue de moulage avec le plancher 10.

Une fois monté autour du plancher, chaque lien 40, 42 est tendu et comporte un brin mort 44, 46 dont l'extrémité est fixée au plancher par la fixation fusible 48. Pour s'adapter aux différentes longueurs de lien 40, 42 possibles, le plancher comprend plusieurs nervures 50 parallèles entre elles et plus ou moins distantes du centre du plancher 10.

On peut également prévoir des points de soudage ou de collage fusibles de chaque lien 40, 42 au plancher 10 en complément des fixations fusibles 48.

En cas de choc, les liens 40, 42 se détachent du plancher 10 et ne risquent donc pas de rompre à cause de la déformation du plancher 10.

Ce plancher 10 d'un type nouveau nécessite la mise en oeuvre d'un nouveau procédé de fabrication, qui comporte les étapes suivantes :
- une étape de moulage du plancher 10,
- une étape de pliage selon une ligne de pliure 16 située sur un bord périphérique 12, 12' de ce plancher 10,
- une étape de perçage des orifices de fixation 18, 18'.

L'étape de moulage du plancher 10 est une étape classique. Le moule est légèrement plus grand en largeur que la taille du plancher 10 une fois monté sur la caisse en blanc 26.

L'étape de pliage des bords périphériques 12, 12' de ce plancher 10 est effectuée ensuite aisément grâce aux moyens 22 de formation de la ligne de pliure 16 et à l'aide d'outils conventionnels nécessitant un entretien peu coûteux.

L'étape de perçage des orifices 18, 18' de fixation est également classique. Elle peut être effectuée au préalable de l'étape de pliage ou successivement à celle-ci, ce qui permet un positionnement optimal des orifices 18 et 18' l'un par rapport à l'autre.

On notera que la description de l'invention effectuée ci-dessus n'est pas limitative.

Selon une première variante, le plancher 10 comporte non pas deux mais quatre bords périphériques 12, 12', le plancher 10 se fixant alors sous les longerons de la caisse en blanc 26 mais également sous la jupe arrière et une traverse de celle-ci.

Selon une autre variante non-représentée, la partie externe 12a du bord périphérique 12, 12' du plancher 10 n'est pas rectiligne comme représenté sur la figure 1. Par exemple, la partie externe 12a comprend des oreilles comprenant des orifices 18 et à la base desquelles est conformée la ligne de pliure 16.

## Revendications

1. Plancher de véhicule automobile au moins partiellement en matière plastique, comportant un bord périphérique (12, 12') muni d'orifices de fixation (18, 18') et destiné à être rapporté sur une caisse en blanc (26) et fixé à celle-ci par des moyens de fixation (30) traversant lesdits orifices de fixation (18, 18'), **caractérisé en ce que** le bord périphérique (12, 12') est muni d'au moins deux orifices de fixation (18, 18'), disposés de part et d'autre d'une ligne de pliure (16) appartenant audit bord (12, 12'), ledit bord (12, 12') étant conformé de manière à pouvoir être replié sur lui-même le long de cette ligne de pliure (16), en superposant les deux orifices de fixation (18, 18').

2. Plancher de véhicule automobile selon la revendication 1, lequel comporte, sur son bord périphérique, des moyens (22) de formation de la ligne de pliure (16).

3. Plancher de véhicule automobile selon la revendication 2, dans lequel les moyens de formation de la ligne de pliure (16) sont constitués par une diminution locale d'épaisseur (22).

4. Plancher de véhicule automobile selon l'une quelconque des revendications précédentes, lequel comporte un fût fusible (24) au voisinage de l'un des orifices de fixation (18).

5. Plancher de véhicule automobile selon l'une quelconque des revendications précédentes, lequel comporte des moyens (20) de retenue d'une pince (34) apte à serrer le bord du plancher et une partie de la caisse en blanc.

6. Plancher de véhicule automobile selon la revendication 5, dans lequel les moyens de retenue de la pince (34) comprennent une nervure (20) située au voisinage de la ligne de pliure (16).

7. Plancher de véhicule automobile selon l'une quelconque des revendications précédentes, dans lequel la ligne de pliure (16) est parallèle à un bord du plancher (10), s'étendant dans la direction longitudinale du véhicule.

8. Plancher de véhicule automobile selon l'une quelconque des revendications précédentes, lequel forme un bac pour une roue de secours (14).

9. Plancher de véhicule automobile selon l'une quelconque des revendications précédentes, comportant des fibres de renfort en tissu.

10. Plancher de véhicule automobile selon l'une quelconque des revendications précédentes, comportant au moins une nervure (50) de fixation d'au moins un lien (40, 42) de maintien du plancher (10) à la caisse en blanc, le lien (40, 42) étant destiné à être enserré entre la nervure de fixation et une agrafe (52) apte à recouvrir la nervure (50).

11. Procédé de fabrication d'un plancher (10) de véhicule au moins partiellement en matière plastique, destiné à être rapporté sur un véhicule automobile, comprenant une étape de moulage, **caractérisé en ce qu'**il comprend, postérieurement à l'étape de moulage, une étape de pliage du plancher selon une ligne de pliure située sur un bord périphérique de ce plancher.
